# Europäisches Patentamt
# European Patent Office
# Office européen des brevets

(11) Veröffentlichungsnummer: **0 067 244**
A2

(12) ## EUROPÄISCHE PATENTANMELDUNG

(21) Anmeldenummer: 81108712.1

(22) Anmeldetag: 22.10.81

(51) Int. Cl.³: **G 06 K 9/32**
G 06 K 9/34, H 04 N 1/41

(30) Priorität: 03.04.81 DE 3113555

(43) Veröffentlichungstag der Anmeldung:
22.12.82 Patentblatt 82/51

(84) Benannte Vertragsstaaten:
CH FR GB IT LI NL SE

(71) Anmelder: SIEMENS AKTIENGESELLSCHAFT Berlin
und München
Postfach 22 02 61
D-8000 München 22(DE)

(72) Erfinder: Scherl, Wolfgang, Dipl.-Ing.
Kafkastrasse 54
D-8000 München 83(DE)

(72) Erfinder: Abele, Ludwig, Dipl.-Ing.
Lindenweg 3
D-8082 Grafrath(DE)

(72) Erfinder: Wahl, Friedrich, Dipl.-Ing., Dr.
5879 Herma St.
San Jose, Ca.95123(US)

(54) Verfahren zum automatischen Erkennen von Weissblöcken sowie Text-, Graphik- und/oder Graubildbereichen auf Druckvorlagen.

(57) Um eine kostengünstige und raumsparende Speicherung und/oder eine zeitsparende Übertragung von Weißblöcke sowie Text-, Graphik- und/oder Graubildbereiche von Druckvorlagen repräsentierenden Daten zu erreichen, ist Voraussetzung, daß die genannten unterschiedlich strukturierten Druckvorlagenbereiche jeweils optimal binär zu codieren sind. Bei dem vorgeschlagenen Verfahren wird die Druckvorlage (D) opto-elektronisch durch ein Videosystem (V) abgetastet. Die gewonnenen Abtastwerte werden digitalisiert und abgespeichert. In mehreren Verfahrensschritten werden nacheinander horizontale und vertikale Weißblöcke in dem gespeicherten binären Abbild gesucht. Das durch horizontale Weißblöcke und das durch vertikale Weißblöcke unterteilte binäre Abbild werden miteinander logisch verknüpft, um weiße "Rahmen" für die einzelnen Druckvorlagenbereiche zu finden. Derartig weiß umrahmte Druckvorlagenbereiche werden anschließend einer Merkmalsextraktion unterzogen, um jeweils die Art (Text, Graphik bzw. Graubild) des Druckvorlagenbereiches zu bestimmen.

FIG 1

SIEMENS AKTIENGESELLSCHAFT       Unser Zeichen
Berlin und München               VPA 81 P 8016 E

Verfahren zum automatischen Erkennen von Weißblöcken sowie Text-, Graphik- und/oder Graubildbereichen auf Druckvorlagen.

Die vorliegende Erfindung betrifft ein Verfahren zum automatischen Erkennen von Weißblöcken sowie Text-, Graphik- und/oder Graubildbereichen auf Druckvorlagen.

In einem typischen Büro werden Schriftstücke erstellt, modifiziert und abgespeichert. Um diese Aufgaben möglichst wirtschaftlich lösen zu können, wurden Textbearbeitungsautomaten entwickelt, die auf einfachem Wege Fehlerkorrekturen, Einfügungen neuer Textteile, Zusammensetzungen von Texten mit unterschiedlichem Ursprung, beliebige Wiedergabe und eine elektronische Speicherung der die Textteile repräsentierenden Daten ermöglichen. Der Vorteil eines derartigen Textbearbeitungsautomaten gegenüber einer herkömmlichen Schreibmaschine liegt in seiner Flexibilität und Zeitersparnis beim Erstellen von Schriftstücken und der dadurch bedingten höheren Effektivität.

Ein wichtiges Kriterium bei der Entscheidung für einen Textbearbeitungsautomaten ist der Aufwand zum Speichern und/oder Übertragen von bereits auf Papier bestehender Information in und/oder auf dem/den Textbearbeitungsautomaten. Eine manuelle Übertragung großer Textmengen ist sehr aufwendig. Von Vorteil wäre eine automatische Übertragung. Eine Betrachtung von in Frage kommenden Vorlagen ergibt, daß diese im wesentlichen aus Text-, Graphik- und/oder Graubildbereichen bestehen. Um eine optimale Codierung der diese Vorlagenteile repräsentierenden Daten sowie eine getrennte Manipulation dieser genannten Komponenten erreichen zu können, müssen ein Verfahren und eine Vorrichtung zur Durchführung des Verfahrens geschaffen werden, die in der Lage sind, die Komponenten automatisch zu trennen und als solche zu klassi-

Pap 1 Wi / 03.04.1981

fizieren.

Der vorliegenden Erfindung liegt die Aufgabe zugrunde, ein Verfahren und eine Vorrichtung zur Durchführung des Verfahrens anzugeben, mittels derer die obengenannten Vorgänge auf einfache, schnelle und zuverlässige Art und Weise durchgeführt werden können.

Die genannte Aufgabe wird durch ein Verfahren nach dem Oberbegriff des Hauptanspruchs gelöst, das durch die im kennzeichnenden Teil des Hauptanspruchs angegebenen Merkmale charakterisiert ist.

Die Erfindung bietet den Vorteil, daß ein verhältnismäßig einfaches Verfahren, das demzufolge auch - insbesondere durch die Verfügbarkeit preisgünstiger und raumsparender Datenverarbeitungs-Hilfsmittel, wie beispielsweise Mikrocomputer - eine verhältnismäßig einfache Anordnung zur Durchführung dieses Verfahrens voraussetzt, geschaffen wird, mittels dessen die genannte Aufgabe gelöst werden kann.

Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren im einzelnen erläutert.

Fig. 1 zeigt schematisch das Blockschaltbild einer Anordnung zur Durchführung des erfindungsgemäßen Verfahrens mit der abzutastenden Druckvorlage D, einem Video-Abtaster V, einem Analog/Digital-Wandler A/D, einem Speicher S und einem Rechner R.

Fig. 2 zeigt ein Flußdiagramm, aus dem die zeitliche Zuordnung einzelner Verfahrensschritte des erfindungsgemäßen Verfahrens zueinander ersichtlich ist.

Fig. 3 zeigt einen Ausschnitt einer typischen Druckvorlage, auf die das erfindungsgemäße Verfahren anzuwenden ist.

Fig. 4 zeigt eine Wiedergabe des gleichen Ausschnitts der typischen Druckvorlage, gemäß Fig. 3, jedoch nach Durchführung eines vorbereitenden Verfahrensschrittes:

Fig. 5 zeigt eine Wiedergabe des Ausschnitts gemäß Fig. 3 nach Durchführung eines ersten Verfahrensschrittes.

Fig. 6 zeigt eine Wiedergabe des Ausschnitts gemäß Fig. 3 nach der Durchführung eines zweiten Verfahrensschrittes.

Fig. 7 zeigt eine Wiedergabe des Ausschnitts gemäß Fig. 3 nach Durchführung eines dritten Verfahrensschrittes.

Fig. 8 zeigt eine Wiedergabe des Ausschnitts gemäß Fig. 3 nach Durchführung eines letzten Verfahrensschrittes.

Fig. 9 zeigt eine Verteilung der Merkmale von einzelnen segmentierten Vorlagenbereichen gemäß Fig. 7, wobei jeweils ein Merkmalepaar $P_W/P_{CC}$ je Druckvorlagenbereich dargestellt ist.

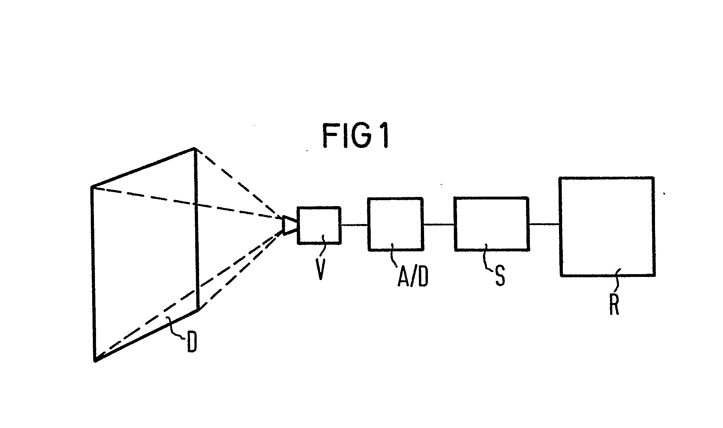

Wie bereits erläutert, zeigt Fig. 1 schematisch das Blockschaltbild einer Anordnung zur Durchführung des erfindungsgemäßen Verfahrens. Mit dieser Anordnung, die lediglich ein bevorzugtes Ausführungsbeispiel für eine derartige Anordnung darstellt, wird jeweils eine Seite der Druckvorlage D über ein geeignetes Videosystem, nämlich in diesem Ausführungsbeispiel einen Video-Abtaster V, abgetastet. Die Ausgangssignale dieses Video-Abtasters V werden einem Analog/Digital-Wandler A/D zugeführt. Die Signalausgänge dieses Analog/Digital-Wandlers A/D sind mit Signaleingängen eines vorzugsweise als Halbleiterspeicher ausgeführten Speichers S verbunden. Zu diesem Speicher hat ein Rechner R, der vorzugsweise als Mikrocomputer ausgeführt ist, Zugriff. Der Rechner R verarbeitet nach dem erfindungsgemäßen Verfahren die in dem Speicher S abgespeicherten Daten zum Ermitteln der Parameter der abgetasteten Druckvorlage D.

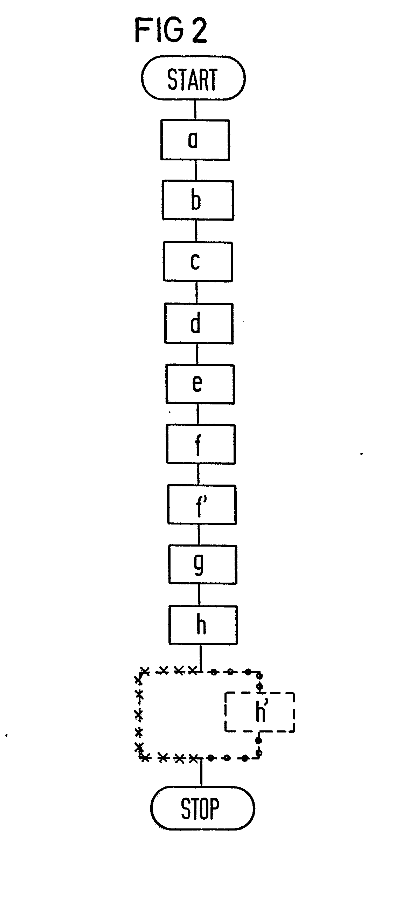

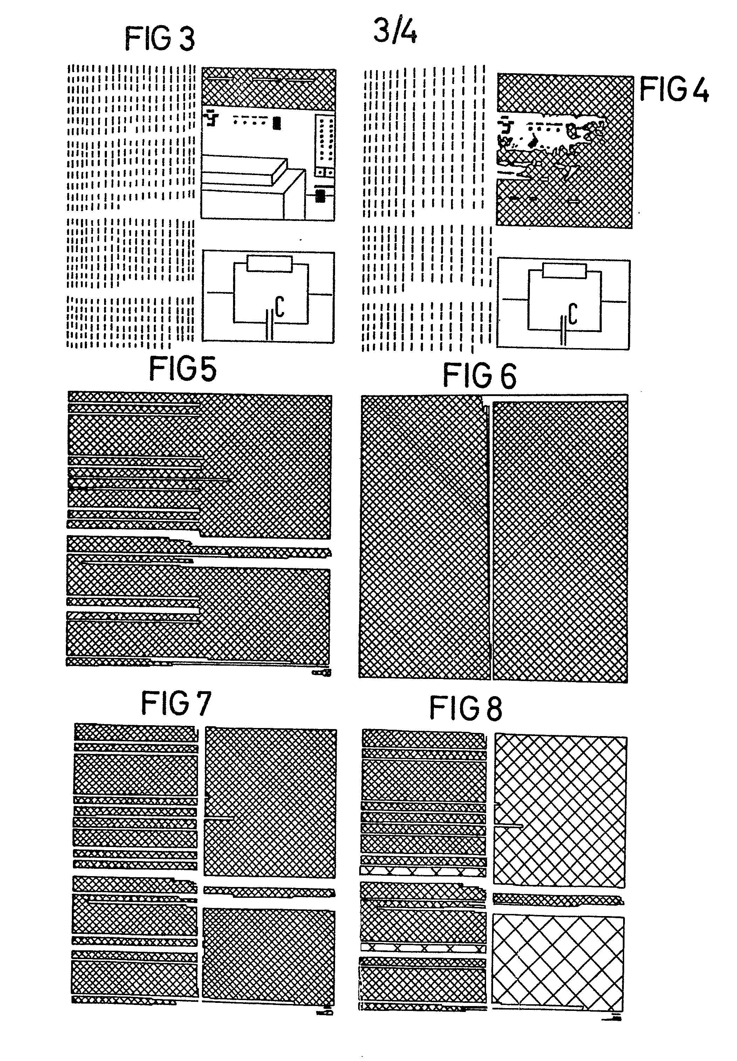

Zum automatischen Erkennen von Weißblöcken sowie Text-, Graphik und/oder Graubildbereichen auf Druckvorlagen, wird zunächst die Druckvorlage D abgetastet, vergl. "a" in Fig.2. Die bei dem Abtastvorgang entstehenden Signale werden mittelbar in den Speicher S eingelesen, vergl. "b" in Fig. 2. Aufgrund der eingelesenen Signale kann bedarfsweise ein später bei Abwicklung des erfindungsgemäßen Verfahrens benötigter Grauwert bestimmt werden, vergl. "c" in Fig. 2. Ein Grauwert kann jedoch fest vorgegeben sein, falls dies nach der Art der zu bewertenden Druckvorlagen möglich ist. Anschließend wird erfindungsgemäß in einem vorbereitenden Verfahrensschritt d zum Bilden eines Binärbildes der Druckvorlage, vergl. Fig. 3, jedes in analoger Form entstehende, die optoelektronische Abbildung eines Abtastpunktes repräsentierende Signal jeweils mittels eines Entscheidungsvorganges entweder einer einen "Weißwert" repräsentierenden Binärzahl, vorzugsweise 1, oder einer einen "Schwarzwert" repräsentierenden Binärzahl, vorzugsweise 0, zugeordnet. Anschließend wird in einem ersten Verfahrensschritt e das derart entstandene Binärbild, vergl. Fig. 4, der Druckvorlage auf Weißbereiche hin abgesucht. Dies geschieht sowohl in horizontaler Richtung des Binärbildes, vergl. Fig. 5, als auch in vertikaler Richtung des Binärbildes, vergl. Fig. 6. In einem zweiten Verfahrensschritt f werden dann jeweils zusammenhängende, durch Weißbereiche vollständig umschlossene Druckvorlagenbereiche, vergl. Fig. 7, bestimmt, die zum Zwecke einer folgenden Identifizierung numeriert werden, vergl. f' in Fig. 2. In einem dritten Verfahrensschritt g wird für jeden gefundenen derartigen Druckvorlagenbereich eine individuelle Merkmalsextraktion vorgenommen. In einem letzten Verfahrensschritt h wird für jeden dieser Druckvorlagenbereiche eine auf den gefundenen Merkmalen basierende Klassifikation als Weiß-, Text-, Graphik- oder Graubildbereich durchgeführt, vergl. Fig. 8, wodurch eine jeweils optimale Codierung des Informationsinhaltes der betreffenden Druckvorlagenbereiche ermöglicht wird.

Das in analoger Form entstehende, die optoelektronische Abbildung repräsentierende Signal kann in einem Analogverfahren als "Weißwert" oder "Schwarzwert" klassifiziert werden. Vorteilhafterweise erfolgt eine solche Klassifizierung jedoch erst, nachdem das in analoger Form entstehende, die optoelektronische Abbildung repräsentierende Signal in an sich bekannter Weise digitalisiert und anschließend der derart gewonnene Digitalwert mittels eines der an sich bekannten Verfahren, vorzugsweise durch Vergleich mit einem vorgegebenen digitalen Schwellwert, als "Weißwert" oder "Schwarzwert" bestimmt worden ist. Die Einteilung in "Weißwerte" und "Schwarzwerte" erfolgt erfindungsgemäß mittels eines Grauschwellwertes, wobei das Binärbild der betreffenden Druckvorlage mittels dieses Grauschwellwertes berechnet wird. Der Grauschwellwert entspricht einem Wert, der vorzugsweise 80 % des maximal möglichen Weißwertes beträgt.

Gemäß einer Weiterbildung der Erfindung werden von der betreffenden Druckvorlage jeweils ein Binärbild mit horizontalen Weißblöcken und ein Binärbild mit vertikalen Weißblöcken gebildet. Diese beiden Binärbilder werden mittels einer logischen Funktion miteinander verknüpft, so daß ein weiteres Binärbild entsteht, welches ggf. vorhandene "weiße Rahmen", die die betreffenden Druckvorlagenbereiche einschließen, darstellt. Die logische Verknüpfungsfunktion ist vorzugsweise eine ODER-Funktion.

Jedem der ermittelten, durch einen "weißen Rahmen" eingeschlossenen Druckvorlagenbereiche wird eine einen Grauwert repräsentierende Zahl zugeordnet. Diese Zahl kennzeichnet den jeweiligen Druckvorlagenbereich als Text-, Graphik-, Graubildbereich oder Weißblock.

Im Verlauf des erfindungsgemäßen Verfahrens werden gemäß einer vorteilhaften Weiterbildung jeweils eine Prozentzahl von weißen Punkten in einem Druckvorlagenbereich und eine Prozentzahl von Punktepaaren gleichen Binärwerts im gleichen Druckvorlagenbereich ermittelt, wobei ein Punktepaar zwei benachbarte Punkte in Zeilenrichtung darstellt. Diese derart gewonnenen Merkmale werden in an sich bekannter Weise dazu benutzt, mit Hilfe stückweise linearer Klassifikatoren eine Trennung der Druckvorlagenbereiche zu erreichen.

Nach der durchgeführten Klassifikation wird gemäß einer anderen Weiterbildung der Erfindung eine zusätzliche Untersuchung dahingehend durchgeführt, ob die örtlichen Relationen der Druckvorlagenbereiche typischen Anordnungen von Druckvorlagenbereichen entsprechen. Im Falle des Nichtvorliegens einer typischen Anordnung wird eine entsprechende Korrektur, vergl. "h'" in Fig. 2, der Klassifikation durchgeführt.

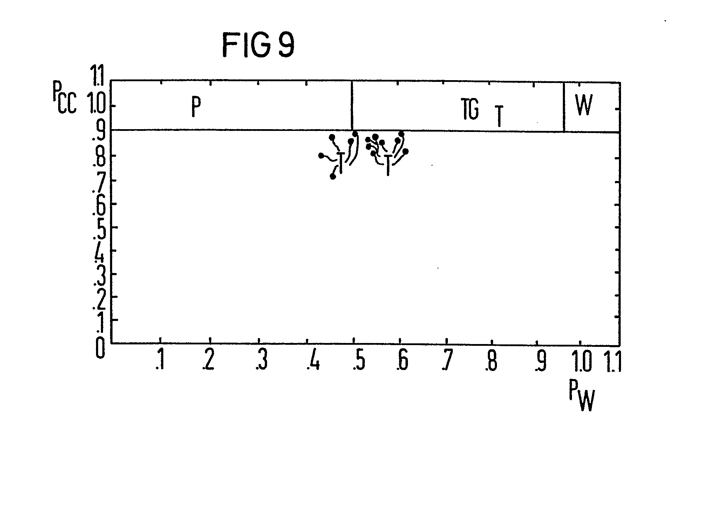

Fig. 9 zeigt, wie bereits erläutert, eine Verteilung der Merkmale von einzelnen segmentierten Vorlagenbereiche gemäß Fig. 7, wobei jeweils ein Merkmalepaar $P_W/P_{CC}$ je Druckvorlagenbereich dargestellt ist. Dabei bedeuten:

| | | |
|---|---|---|
| $P_W$ | = | Prozentzahl von weißen Punkten |
| $P_{CC}$ | = | Prozentzahl von Punktepaaren gleichen Binärwertes |
| $P$ | = | Graubildbereich |
| $T$ | = | Textbereich |
| $G$ | = | Graphikbereich |
| $W$ | = | Weißblock. |

Es sind verschiedene Codierungsverfahren für die einzelnen Druckvorlagenbereiche vorgesehen. Aufgrund der den Grauwert repräsentierenden Zahl wird die jeweils günstigste, vorzugsweise am wenigsten redundante Codierungsart für den betreffenden Druckvorlagenbereich ausgewählt.

Das erfindungsgemäße Verfahren bietet den Vorteil, daß durch die verhältnismäßig einfachen und auf gängige Rechnerstrukturen zugeschnittenen Verarbeitungsprozeduren eine verhältnismäßig schnelle Verarbeitung möglich ist. Damit entfällt in aller Regel die Notwendigkeit für einen wahlfreien Speicherzugriff. Anstattdessen können wirtschaftlichere Speicher- und Rechnerstrukturen verwendet werden.

11 Patentansprüche
9 Figuren

Patentansprüche

1. Verfahren zum automatischen Erkennen von Weißblöcken sowie Text-, Graphik und/oder Graubildbereichen auf Druckvorlagen, bei dem eine optoelektronische Abtastung der betreffenden Druckvorlage vorgesehen ist und bei dem die in analoger Form entstehenden, die optoelektronische Abbildung der Druckvorlage repräsentierenden Signale jeweils digitalisiert werden, wonach die derart gewonnenen Binärzahlen als digitales Abbild der Druckvorlage gespeichert werden, d a d u r c h   g e k e n n z e i c h n e t , daß das digitale Abbild der Druckvorlage in einem vorbereitenden Verfahrensschritt (d) mittels eines Entscheidungsvorganges in ein Binärbild umgewandelt wird, daß dieses Binärbild in einem ersten Verfahrensschritt (e) auf Weißbereiche hin abgesucht wird, daß in einem zweiten Verfahrensschritt (f) jeweils zusammenhängende, durch Weißbereiche vollständig umschlossene Druckvorlagenbereiche bestimmt werden, die zum Zwecke einer folgenden Identifizierung numeriert werden, daß in einem dritten Verfahrensschritt (g) für jeden gefundenen derartigen Druckvorlagenbereich eine individuelle Merkmalsextraktion vorgenommen wird und daß in einem letzten Verfahrensschritt (h) für jeden dieser Druckvorlagenbereiche eine auf den gefundenen Merkmalen basierende Klassifikation als Weiß-, Text-, Graphik- oder Graubildbereich durchgeführt wird, wodurch eine jeweils optimale Codierung der betreffenden digitalen Teilabbilder ermöglicht wird.

2. Verfahren nach Anspruch 1, d a d u r c h   g e -
k e n n z e i c h n e t , daß die in analoger Form entstehenden, die optoelektronischen Abbildung repräsentierenden Signale in einem Analogverfahren in "Weißwerte" und "Schwarzwerte" eingeteilt werden.

3. Verfahren nach Anspruch 1, d a d u r c h   g e -
k e n n z e i c h n e t , daß die in analoger Form entstehenden, die optoelektronische Abbildung repräsentierenden Signale in an sich bekannter Weise digitalisiert werden und daß die derart gewonnenen Digitalwerte mittels
eines der an sich bekannten Verfahren, vorzugsweise durch
Vergleich mit einem vorgegebenen digitalen Schwellwert, in
"Weißwerte" und "Schwarzwerte" eingeteilt werden.

4. Verfahren nach Anspruch 2 oder 3, d a d u r c h  g e -
k e n n z e i c h n e t ,   daß die Einteilung in "Weißwerte" und "Schwarzwerte" mittels eines Grauschwellwertes durchgeführt wird, wobei das Binärbild der betreffenden
Druckvorlage mittels dieses Grauschwellwertes berechnet
wird.

5. Verfahren nach Anspruch 4, d a d u r c h  g e -
k e n n z e i c h n e t ,   daß der Grauschwellwert  einem
Wert entspricht, der vorzugsweise 80 % des maximal möglichen
Grauwertes beträgt.

6. Verfahren nach Anspruch 1, d a d u r c h  g e -
k e n n z e i c h n e t ,   daß von der betreffenden Druckvorlage jeweils ein Binärbild mit horizontalen Weißblöcken
und ein Binärbild mit vertikalen Weißblöcken gebildet werden und daß die beiden Binärbilder mittels einer logischen
Funktion miteinander verknüpft werden, so daß ein weiteres
Binärbild entsteht, das von "weißen Rahmen" umschlossene
Druckvorlagenbereiche getrennt darstellt.

7. Verfahren nach Anspruch 6, d a d u r c h  g e -
k e n n z e i c h n e t ,   daß die logische Verknüpfungsfunktion eine ODER-Funktion ist.

8. Verfahren nach Anspruch 1, d a d u r c h  g e -
k e n n z e i c h n e t ,   daß jedem der ermittelten,
durch einen "weißen Rahmen" eingeschlossenen Druckvorlagenbereiche eine  einen Grauwert repräsentierende Zahl zugeordnet wird, womit der betreffende Druckvorlagenbereich als Text-, Graphik-, Graubildbereich oder Weißblock gekennzeichnet wird.

9. Verfahren nach Anspruch 8, d a d u r c h  g e -
k e n n z e i c h n e t , daß eine Prozentzahl von weißen
Punkten in einem Druckvorlagenbereich und eine Prozentzahl
von Punktepaaren gleichen Binärwerts im gleichen Druckvorlagenbereich ermittelt werden, wobei ein Punktepaar zwei
benachbarte Punkte in Zeilenrichtung darstellt, und daß
diese derart gewonnenen Merkmale in an sich bekannter Weise dazu benutzt werden, mit Hilfe stückweise linearer
Klassifikatoren eine Trennung der Druckvorlagenbereiche zu
erreichen.

10. Verfahren nach Anspruch 9, d a d u r c h  g e -
k e n n z e i c h n e t , daß nach der durchgeführten
Klassifikation eine zusätzliche Untersuchung dahingehend
durchgeführt wird, ob die örtlichen Relationen der Druckvorlagenbereiche typischen Anordnungen von Druckvorlagenbereichen entsprechen und daß im Falle des Nichtvorliegens
einer typischen Anordnung eine entsprechende Korrektur (h')
der Klassifikation durchgeführt wird.

11. Anordnung zur Durchführung des Verfahrens nach einem
der vorhergehenden Ansprüche, d a d u r c h  g e -
k e n n z e i c h n e t , daß als Abtastorgan zum Abtasten der Druckvorlage (D) ein an sich bekannter Video-
Abtaster (V) vorgesehen ist, dessen Ausgangssignale einem
Analog/Digital-Wandler (A/D) zuführbar sind, daß die Signalausgänge dieses Analog/Digital-Wandlers (A/D) mit den
Signaleingängen eines Halbleiterspeichers (S) verbunden
sind und daß ein Rechner (R), vorzugsweise ein Mikrocomputer, vorgesehen ist, der die abgespeicherten Daten zum
Ermitteln der Parameter der abgetasteten Druckvorlage (D)
verarbeitet.

FIG 1

FIG 2

FIG 3

FIG 4

FIG 5

FIG 6

FIG 7

FIG 8

# FIG 9